# EUROPEAN PATENT APPLICATION

(11) **EP 0 863 317 A2**
(43) Date of publication of application: **09.09.1998**
(21) Application number: 98301644.5
(22) Date of filing: 05.03.1998
(51) Int. Cl.: F16B 12/04, F16B 12/02

(54) **Anchoring biscuit device for joining two adjacent boards**

(30) Priority: 05.03.1997 US 811898
(71) Applicant: Eberle, Harry W., III, Califon, New Jersey 07830 (US)
(72) Inventor: Eberle, Harry W., III, Califon, New Jersey 07830 (US)
(74) Representative: Ablewhite, Alan James

(57) **Abstract**

An anchoring biscuit device for joining boards, including a horizontal top element having a generally biscuit-shaped top view configuration, at least one vertical support member attached to the underside of the top element and extending downwardly for a predetermined length to place the top element at a predetermined height for joinder of two adjacent boards which have been pre-cut with biscuit receiving slots, and, an attachment component attached to at least one of the top element and the vertical support member for attachment of the anchoring biscuit device to a support board for anchoring and support of the two adjacent boards. The present invention is also an anchoring half-biscuit device for joining two boards located at right angles to one another. It includes a first substantially flat horizontal top element having a generally half-biscuit-shaped top view configuration, at least one substantially vertical support member, at least one horizontal extended member extending outwardly from the vertical support member and an attachment component.

## Description

### BACKGROUND OF THE INVENTION

### 1. Field of the Invention

The present invention is directed to an improved biscuit for joining adjacent boards. More specifically, the invention is an anchoring biscuit device. as well an anchoring half biscuit device which has the ability for pre-setting distances between adjacent boards and attaching to at least one board by means in addition to the biscuit itself. The anchoring biscuit device physically joins two adjacent boards in the same plane to a third, supporting board. The anchoring half-biscuit device joins two adjacent boards at right angles to one another.

### 2. Information Disclosure Statement

The following patents are representative of the state of the art for wood joining devices, equipment and methods:

U.S Patent No. 2,332,081 to G.M. Hunt et al is directed to a wooden panel. It is described as a panel comprising wooden strips joined along their edges with glue, each strip having at least one groove in its edge matching groove in the edge of the adjoining strip, an asbestos millboard spline fitted in the matching grooves and bridging the joint between the strips, crosshands covering the strips on both sides of the panel, and veneers covering the crossbands.

U.S Patent No. 4,641,988 to Ganner is directed to a fitting for releasably joining two structural components. It is illustrated for releasably joining two structural components particularly plate-shaped structural components which extend at a right angle relative to one another, a fitting has a preferably cylindrical locking element which can be inserted either directly in a bore in the first structural component or it can be inserted indirectly in a housing, and a holding piece with a holding projection anchored in the second structural component. In the assembled position, the holding projection & abuts against one or two gripping surfaces of the locking element which gripping surfaces are of, for example, eccentric shape, and the holding projection is pulled toward the locking element when the locking element is turned. The holding piece is constructed plateshaped and is insertable in a slot in the second structural component.

U.S Patent No. 5,004,027 to Legler et al illustrates a biscuit joiner. It is described as a biscuit joiner for cutting semi-elliptical slots in opposing edges of workpieces which are to be joined along those edges includes a housing adapted to be mounted upon the quill of a multipurpose woodworking tool, which housing encloses a rotary saw blade adapted to be attached to a spindle projecting from the quill on which the housing is mounted. A spring loaded guide projects from the front face of the housing and has a slot therethrough, so that when the front face of the guide is engaged by an edge of a workpiece to be slotted the guide can be pushed inwardly against spring pressure, allowing the rotary saw blade to be exposed and form a slot in the edge of the workpiece. Adjustable stops are provided on the guide so that a desired depth of cut will automatically be made after adjustment. An alternative construction of this biscuit joiner is especially adapted for use in conjunction with a conventional drill press, with the arbor which carries the saw blade being clamped in the chuck on the drive spindle of the drill motor.

U.S Patent No. 5,377,132 to Fujii et al illustrates a wood joining structure and method thereof. It is described as a technique is provided for joining wood members. A plurality of slits are formed on the end portions of wood nieces desired to be joined, and the end portions are abutted with corresponding slits in alignment to form a common surface. Each of the abutted wood end portions is fixed by temporary fixing means to a desired joining state. Thereafter, an adhesive agent is applied into the interior surfaces of the slits. Connecting plates, e.g., made of a reinforced plastic material coated with the adhesive agent, are inserted into the aligned slits. The adhesive agent is then hardened.

U.S Patent No. 5,458,433 to Stastny explicates a biscuit and joint made using same. It is described as a biscuit having octagonal outer periphery is used to form a joint between first and second workpieces. The biscuit fits within arcuate slots formed in the workpieces, with glue placed in the slots and/or on the biscuit before the joint is put together. The biscuit is made of an anhydrous compressed wood.

U.S Patent No. 5,529,428 to Bischof is directed to a metallic structural element for connecting workpieces consisting of wood, woodworking material or plastic. It is described as a metallic structural element for connecting workpieces consisting of wood, woodworking material or plastic, consisting of a lamellar part, which provides the non-positive connection with the first workpiece provided with a groove and a transverse hole, and a bolt-like part which, through screwing or pinning, realizes the non-positive connection with the second workpiece provided with a longitudinal hole. The lamellar part has, in the center, a hole which is at right angles to the plane of the lamella and is intended for fixing in the groove of the workpiece. Variants having a wing-like long or rectangular short lamellar part and a bolt-like part in the form of a conical wood screw, cylindrical screw, screw having a metal thread, threaded sleeve or pin. Accessories: screwing tool and drilling template.

Notwithstanding the prior art, the present invention is neither taught nor rendered obvious thereby.

### SUMMARY OF THE INVENTION

The present invention is an anchoring biscuit device for joining three boards. It includes, (a) a first substantially flat horizontal top element having a generally biscuit-shaped top view configuration, (b) at least one substantially vertical support member attached to the underside of the ton element and extending downwardly therefrom for a predetermined length to place the top element at a predetermined height for joinder of two adjacent boards which have been pre-cut with biscuit receiving slots, and, (c) an attachment component attached to at least one of the top element and the vertical support member for attachment of the anchoring biscuit device to a support board for anchoring and support of the two adjacent boards. The present invention is also an anchoring halfbiscuit device for joining two boards. This includes, (a) a first substantially fla horizontal top element having a generally halfbiscuit-shaped top view configuration, (b) at least one substantially vertical support member attached to the underside of the top element and extending downwardly therefrom for a predetermined length to place the top element at a predetermined height for joinder of two adjacent boards, one of which has been pre-cut with biscuit receiving slots, (c) at least one horizontal extended member extending outwardly from the vertical support member and, (d) an attachment component for attachment of the anchoring half-biscuit device to a support board for anchoring and support of two adjacent boards located at right angles to one another.

### BRIEF DESCRIPTION OF THE DRAWINGS

The present invention should be more fully understood when the specification herein is taken in conjunction with the drawings appended hereto wherein:
Figure 1 illustrates a top view of one preferred embodiment of the present invention anchoring biscuit device, Figure 2 illustrates a front view, and Figure 3 illustrates a side view thereof;
Figure 4 shows a side view of the present invention device shown in Figures 1 through 3 but being attached to a joist and a first deck board and about to be attached to a second deck board where both deck boards are supported by that joist;
Figure 5 shows a front view of an alternative embodiment present invention anchoring biscuit device;
Figure 6 shows a front view of an alternative embodiment present invention anchoring biscuit device having a vertical extended member for horizontal attachment of the device to a joist and Figure 7 shows an end view thereof in use;
Figure 8 illustrates a top view of a present invention anchor biscuit device having a horizontal extended member and Figures 9 and 10 show front and side views thereof, respectively;
Figure 11 shows a top view of a present invention anchor half biscuit device and, Figures 12 and 13 show a front view and end view thereof, respectively; and,
Figures 14 and 15 show other present invention anchor half-biscuit devices attaching two adjacent boards that are located at right angles to one another.

### DETAILED DESCRIPTION OF THE PRESENT INVENTION

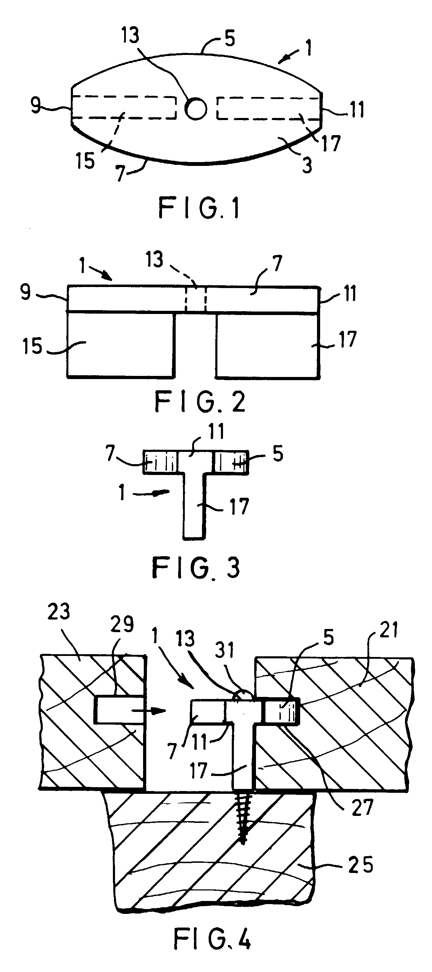

In Figure 1, there is shown a top view of present invention anchor biscuit device 1. Device 1 includes a top element 3 having a flat top surface as shown, and a top view shape of a biscuit. Thus, it includes walls 5 and 7 in the shape of arcs having predetermined radius and predetermined arc lengths. In this case, they are perfectly symmetrical and have flat endwalls 9 and 11. Without exceeding the scope of the present invention, these biscuit shapes could be slightly modified, such as having slightly noncircular arcs or linear segments at angles approximating arcs.

Top element 3 also includes an attachment means, in this case, screw hole 13 located on center. This enables the user to nail or screw device 1 into a joist, as more fully described in conjunction with Figure 4 below.

Figures 2 and 3 show front and end (right side, views, respectively of device 1 shown in Figure 1. Thus, device 1 includes vertical support members 15 and 17 with a space therebetween to permit a screw or nail to pass through screw hole 13 into a joist or support board. Vertical support members 15 and 17 have a predetermined height so as to rest on a joist in such a way as to establish biscuit top element 3 at a predetermined height from the joist for attachment of two adjacent boards thereto which have pre-cut biscuit slots corresponding thereto.

Figure 4 shows present invention device 1 with identical parts identically numbered. Top element 3 (rear) is inserted into pre-cut biscuit slot 27 of horizontal beam 21, as shown. Screw 31 is inserted into screw hole 13 and into joist beam 25. This anchors device 1 to joist beam 25 and establishes the elevation of top element 3 so as to match with biscuit slot 27. Beam 23 will be placed atop joist 25 and adjacent to beam 21 by being slid into position with wall 7 fitting into slot 29 and the bottom of beam 23 resting on joist 25. By this method, device 1 attaches all three boards to one another as the biscuit aspects are typically tight-fitting. Thus, for example, decking boards may be attached without the need for nails or screws entering the beams from the top.

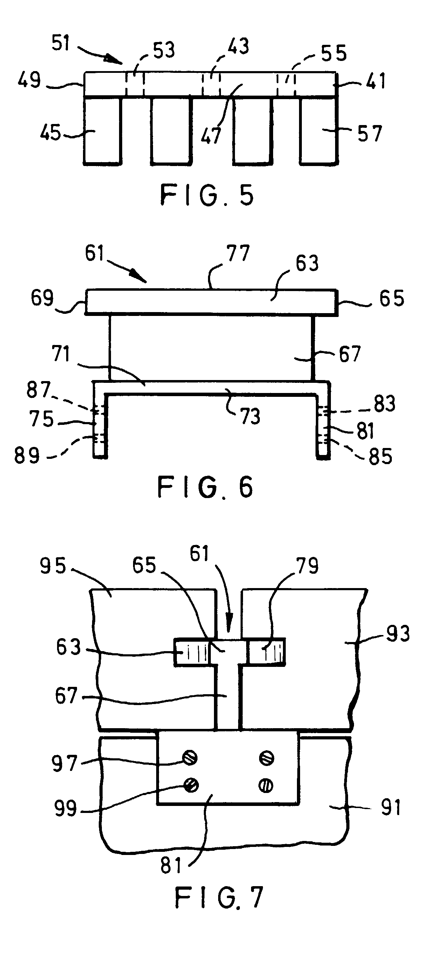

Figure 5 shows an alternative embodiment present invention device 51 which has multiple screw holes 43, 53 and 55 located in a straight line on center of top element 47. It includes ends 41 and 49, and it has a plurality of vertical support members such as vertical support members 45 and 57, with spaces therebetween for screw or nail insertions. Device 51 is used in the same manner as device 1 described above with respect to Figure 4.

Figure 6 shows a front view of alternative embodiment Present invention anchoring biscuit device 61 which includes a top element 77, a vertical support member 67 and a vertical extended member 71 which has a horizontal top 73 and vertical side members 75 and 81. These include screw or nail holes 83, 85, 87, and 89, respectively.

Figure 7 shows a right side view thereof and, referring to Figures 6 and 7, together, note that top element 77 of device 61 has ends 65 and 69 and arc side walls 63 and 79. Thus, as shown in Figure 7, such as screws 97 and 99 are used to anchor device 61 to joist 91 and sidewalls 63 and 79 are fitted in the biscuit slots of planks 95 and 93, respectively.

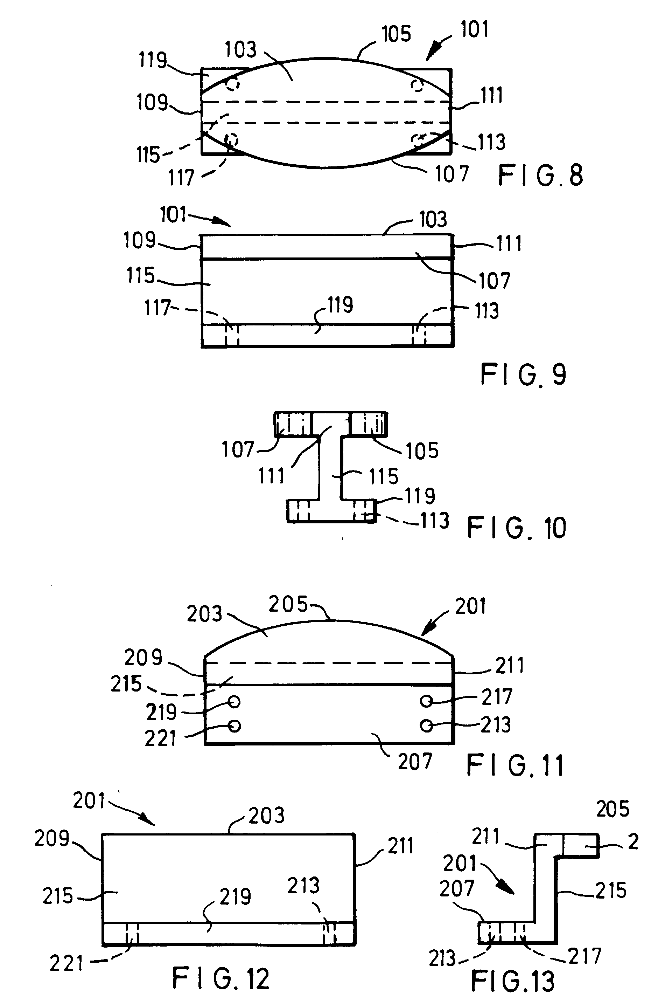

Figure 8 shows a top view of a present invention device 101 and Figures 9 and 10 show the front and right end views thereof respectively. Top element 103 includes arced sidewalls 105 and 107 and ends 109 and 111. There is a vertical support member 115 and a horizontal extended member 119 which extends outwardly from both sides of vertical support member 115 and has screw holes such as screw holes 113 and 117. Device 101 is used in a manner similar to device 61 shown in Figure 7 except that it is vertically toe-nailed or screwed to a joint.

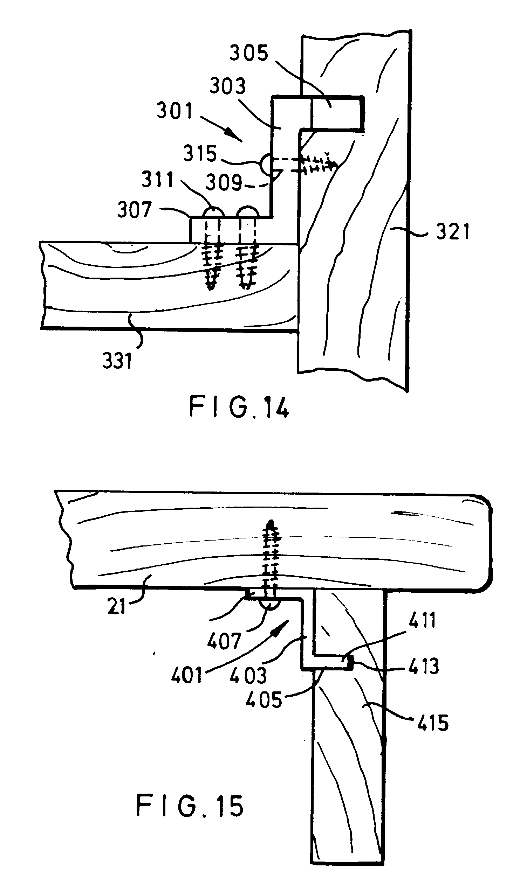

Figure 11 shows a top view of an anchoring half-biscuit present invention device 201. This includes half top element 203 with end walls 211 and 209 and arculated side wall 205. It also includes vertical support member 215 and horizontal extended member 207. Figures 12 and 13 show a front and right end view thereof with identical parts identically numbered. Referring to Figures 11 through 13, note that four screw holes 213, 217, 219 and 221 are provided.

Anchoring half device 201 is utilized to connect two adjacent boards which are at right angles to one another, thus, top element 203 is inserted into a biscuit slot of a first beam and is abutted to a second beam immediately below horizontal extended member 207 and screwed or nailed to device 201 using the aforesaid described screw holes.

Referring to Figure 14 there is shown yet another present invention anchorinq half-biscuit device 301 which includes a top element 305 as well as a vertical support member 303 and a horizontal extended member 307. Screw holes are provided in both vertical support member 303 and horizontal extended member 307. Thus, side wall 305 is inserted into a biscuit slot on vertical beam 321, and device 301 is screwed or nailed to beam 321 (see screw 315). Beam 331 is abutted to beam 321 at right angles and device 301 is screwed thereto (for example, with screw 311).

Referring to Fiqure 15 there is shown yet another present invention anchoring half-biscuit device 401, which includes a top element 405 (inverted in Fiqure 15 and including a halfbiscuit portion 411), as well as a vertical support member 403 and a horizontal extended member 407. Screw holes are provided only in horizontal extended member 407. Thus, halfbiscuit portion 411 is inserted into a biscuit slot 413 on vertical beam 415, and device 401 is screwed or nailed to horizontal beam 421 (see screw 417). Beam 415 is abutted to horizontal beam 421 at right angles and device 401 is used to secure these two beams together as shown.

## Claims

1. An anchoring biscuit device for joining three boards, which comprises:
(a) a first substantially flat horizontal top element having a generally biscuit-shaped or half biscuit-shaped top view configuration, said top element having an imaginary center line;
(b) at least one substantially vertical support member attached to the underside of said top element along said imaginary center line of said top element and extending downwardly therefrom for a predetermined length to place said top element at a predetermined height for joinder of two adjacent boards which have been pre-cut with biscuit receiving slots; and,
(c) attachment means attached to at least one of said top element and said vertical support member for attachment of said anchorinq biscuit device to a support board for anchoring and support of said two adjacent boards.

2. The anchorinq biscuit device of claim 1 wherein said attachment means is at least one screwhole located on said top element for vertical screwing of said anchoring biscuit device to a support board.

3. The anchoring biscuit device of claim 2 wherein there is at least one screwhole located substantially in the center of said top element and there are two vertical support members attached to said top element, said two vertical support members being substantially flat, being in the same plane and one of each being located at least on opposite sides of said at least screwhole.

4. The anchoring biscuit device of claim 1 wherein said attachment means comprises at least one vertical extended member extending downwardly from said vertical support member, said vertical extended member containing at least one screwhole for horizontal screwing to a support board.

5. The anchoring biscuit of claim 1 wherein said attachment means comprises at least one horizontal extended member extending outwardly from said vertical support member, said horizontal extended member containing at least one screwhole for vertical screwing to a support board.

6. The anchoring biscuit device of claim 1 wherein said attachment means comprises a horizontal bottom element extending outwardly on both sides of said support member and where in said horizontal bottom element has at least one screw hole on each opposite side of said vertical support member.

7. The anchoring biscuit device of claim 1 wherein said top element and said vertical support member are uni-structurally formed.

8. The anchoring biscuit device of claim 4 wherein said top element, said vertical support member and said vertical extended member are all uni-structurally formed.

9. The anchoring biscuit device of claim 5 wherein said top element, said vertical support member and said horizontal support member are all uni-structurally formed.

10. An anchoring biscuit device for joining three boards, according to any of claims 1 to 9 which comprises:
(a) a first substantially flat horizontal top element having a generally biscuit-shaped top view configuration, said top element having an imaginary center line and having symmetrical, opposite sidewalls in the shape of a circular arc of predetermined radius and length and having opposite, flat endwalls;
(b) at least one substantially vertical support member attached to the underside of said top element along said imaginary center line of said top element and extending downwardly therefrom for a predetermined length to place said top element at a predetermined height for joinder of two adjacent boards which have been pre-cut with biscuit receiving slots of similar configuration to said top element sidewalls; and,
(c) attachment means attached to at least one of said top element and said vertical support member for attachment of said anchoring biscuit device to a support board for anchoring and support of said two adjacent boards.

11. The anchoring half-biscuit device of claim 1 wherein said attachment means is at least one screwhole located on said vertical support member and at least one screwhole located on said horizontal extended member for screwing of said anchorinq half-biscuit device to two adjacent boards located at right angles to one another.
